# EUROPEAN PATENT APPLICATION

(11) **EP 4 811 268 A1**
(43) Date of publication of application: **23.09.2026**
(21) Application number: 25164440.7
(22) Date of filing: 18.03.2025
(51) Int. Cl.: G06Q 50/40, B60K 35/28, G06F 16/34, H04L 51/063, B60W 50/14

(54) **METHOD FOR OUTPUTTING INFORMATION IN A VEHICLE, COMPUTER PROGRAM AND/OR COMPUTER-READABLE STORAGE MEDIUM, DATA PROCESSING DEVICE AND VEHICLE**

(71) Applicant: Bayerische Motoren Werke Aktiengesellschaft, 80809 München (DE)
(72) Inventor: Zaki, Tarek, 80805 München (DE)

(57) **Abstract**

Method for outputting information in a vehicle; wherein the method comprises: obtaining an incoming information with a semantic content; generating, based on the semantic content, a summary of the information; wherein generating the summary is performed by a generative machine learning model; and outputting a control signal to user-perceivably output the summary in the vehicle.

## Description

The present disclosure relates to a method for outputting information in a vehicle. The disclosure further relates to a computer program and/or a computer-readable storage medium, to a data processing device and to a vehicle.

Serving passengers with convenient and/or entertaining digital features may be considered an important aspect for modern vehicles. Methods for summarizing information in a vehicle are known in the prior art. It is furthermore known that voice messages of a passenger vehicle may be obtained and summarized.

Messages may distract an occupant of the vehicle, in particular the driver of the vehicle. The occupant may not have the time, the capability and/or the opportunity to read and/or listen to incoming text messages, voicemails, emails, etc. The driver may not even be allowed to read a long text, for example with a plurality of lines, to be not distracted from the driving task. It is known to display notifications instead of an entire message, wherein the notification indicates the incoming of the message and may consist of the first line of the entire message. However, such a notification may be irrelevant due to the potentially generic information in the beginning of the message.

US 2021/150141 A1 discloses a vehicle terminal system for processing a message includes: a portable device for receiving the message; and a vehicle terminal for analyzing a text of the message received from the portable device to yield an analysis result, and for determining a recommended operation corresponding to the analysis result. Thus, the vehicle terminal does not output pop-up images for all messages received from the portable device and recommends a message suitable for the user. In one embodiment, the controller may determine a message summarization scheme corresponding to the driver's state.

However, a message summarization corresponding to the driver's state may still leave room for an improvement of the summary.

In the light of the prior art, the object of the present disclosure is to provide a contribution to the prior art, and to provide a method being suitable for improving at least one of the above-mentioned aspects of the prior art, respectively. In particular, it is an object of the disclosure to improve summaries of incoming information in the vehicle.

The object is solved by the features of the independent claim. The dependent claims have further embodiments of the disclosure as their subject matter.

According to an aspect of the present disclosure a method for outputting information in a vehicle is provided; wherein the method comprises: obtaining an incoming information with a semantic content; generating, based on the semantic content, a summary of the information; wherein generating the summary is performed by a generative machine learning model; and outputting a control signal to user-perceivably output the summary in the vehicle.

The method involves obtaining the incoming information with an identifiable meaning as the semantic content. In other words, the method comprises: receiving incoming information with semantic content; determining the semantic content; and generating a summary of the information based on the semantic content. Finally, a control signal is transmitted to present this summary to the user in the vehicle.

The core idea is to create a concise summary of the most essential and critical information of the incoming information. By doing so, distractions of the driver may be reduced and/or eliminated, valuable time for the passengers may be saved. Therein, generating the summary is performed by a generative machine learning model. Such a generative machine learning model may also be called a generative artificial intelligence (Gen-Al). Such a model may have the capability to read, comprehend and summarize the content of text, voice, visual messages and/or a combination thereof, e.g., of a video and/or an animation.

It is realized that it is possible to deploy such a generative machine learning model that processes the incoming information and/or reads incoming messages and accordingly create the summary of the most essential content of the incoming information. To ensure data privacy, it may be ensured that the generative machine learning model may not get trained on data of the passengers and that the data may not be used for any other purpose beside privately outputting the incoming information.

The generative machine learning model makes it possible that the incoming information is comprehensively evaluated and processed to generate a meaningful summary. E.g., the summary may go beyond a known representation of the first few textual characters of the incoming information, which typically comprise a salutation and a name of an intended recipient. Instead, the generative machine learning model may provide a meaningful summary with condensed information relating to the semantic content of the incoming message.

Optionally, the incoming information is obtained via a communication module of the vehicle and/or via a user equipment that is communicatively coupled to the vehicle. Therein, the incoming message may be received via the communication module of the vehicle and may relate to an in-car application, e.g., an in-car messenger may receive the incoming information directly. Alternatively or additionally, a passenger may couple its user equipment to the vehicle and the incoming message is originally sent to the user equipment and the summary is, due to coupling, to be output via the vehicle.

Optionally, the incoming information comprises a text message, a graphic, a voice message and/or a video message and/or the summary is determined to be output on a user interface of the vehicle as a condensed text, as a graphical representation, as a video and/or acoustically. A possibility is to summarize a longer text message and/or email to a, e.g., one-line summary. It is further possible to illustrate the summary and/or an emotion that relates to the incoming message, e.g., via an image, optionally in conjunction with a word and/or by creating and/or choosing an emoji, for example to show an image that is worth "1000 words". Optionally, if a sender's picture is available, it is possible to adapt the picture, e.g., a face of the sender, with a fitting emotion to the incoming information. Furthermore, illustrating an emotion can comprise changing a color of a background of the summary, e.g., red for "danger", green for "okay". For voice messages, it is possible to create the summary mimicking the sender's voice itself, optionally while disclosing to the passenger that this is a summary of the incoming information. It is possible to summarize any of text message, voice message and/or video message by any of text, graphical representation, as a video and/or acoustically.

Optionally, the method further comprises: determining an identification information of an intended recipient of the incoming information; and generating the summary and/or outputting the control signal is performed depending on the identification information. Therein, the method may be specifically adapted to consider the identity of the recipient within the vehicle when the summary is generated. By the identity information, it is possible that personal contexts are detected and considered appropriately.

Optionally, the summary comprises a content section relating to the semantic content, an emotional section relating to an emotion that characterizes the incoming information and/or an implication section relating to an implication based on the incoming information. The summary may be sectioned as: information, emotion, and implication, also called "call to action". The summary may comprise the key information of the semantic content of the incoming information, a concise description and/or illustration of a sender's emotion (e.g. happy, angry, nervous, etc.) and/or it may comprise a precise description to the recipient of what is the "call to action" (e.g. be home today latest at 10:00PM). If the implication section comprises a location, e.g., as an explicit address and/or a name of the location, it is possible to transmit the location to a navigation system and to add it to the route and/or define a corresponding destination.

Optionally, the method comprises: determining, based on the incoming information, an emotion information relating to an emotion that characterizes the incoming information; and generating the summary and/or outputting the control signal is performed depending on the emotion information. This achieves that the emotion of the incoming message may be considered appropriately for generating the summary. Therein, in contrast to an explicit emotional section of the summary, the emotion that characterizes the incoming information may implicitly influence the generation of the summary. E.g., a politely formulated incoming message may be politely summarized and/or a degree of urgency of the incoming message may be reflected in the summary.

Optionally, the summary is mimicked based on an information relating to a sender of the incoming information. This may achieve mimicking the sender. Mimicking the sender may render an effective perception of the summary by the user of the vehicle, wherein in particular an emotion of the sender may be conveyed appropriately. The information relating to the sender may comprise vocal information, i.e., relating to a voice of the sender, e.g., if the incoming information comprises a voice message and/or a video message, and/or a graphical representation of the sender, e.g., if a profile picture of the sender is available and/or the incoming information comprises and image and/or a video that shows the sender. The generative machine learning model may use the information relating to the sender to mimic the sender when generating the summary. For example, it is possible to mimic the voice of the sender for a voice message, a profile picture of the sender may be changed to mimic the emotion associated with the incoming message and/or a video from the profile picture of the sender in which the sender speaks out the summary with the sender's voice and with mimicked emotion deciphered in the semantic of the message may be generated.

According to an aspect of the disclosure, a computer program and/or computer-readable storage medium is provided, comprising instructions which, when being executed by a data processing device, causes the data processing device to carry out the method according to the disclosure. Optionally, the computer program and/or computer-readable storage medium comprises an instruction which, when being executed by a data processing device, causes the data processing device to realize one or more optional and/or preferred technical features of the method according to the disclosure to achieve a technical effect relating thereto.

According to an aspect of the disclosure, a data processing device for a vehicle is provided, wherein the data processing device is adapted to perform the method according to the disclosure. Optionally, the data processing device is adapted to realize one or more optional and/or preferred technical features of the method according to the disclosure to achieve a technical effect relating thereto.

According to an aspect of the disclosure, a vehicle is provided, comprising the data processing device according to the disclosure. Optionally, the data processing device and/or the vehicle is adapted to realize one or more optional and/or preferred technical features of the method according to the disclosure to achieve a technical effect relating thereto.

In an alternative embodiment, the data processing device may be used in a vehicle external server, i.e., a backend, and may be communicatively coupled to the vehicle so that more complex applications may be used to generate the summary. In contrast, simple models and/or numerically effective models may be deployed in the vehicle to generate the summary.

An embodiment according to an aspect of the present disclosure is described with reference to the Figures below.
Fig. 1 shows schematically a vehicle according to an embodiment of the disclosure;
Fig. 2 shows a schematic chart of a method according to an embodiment of the disclosure; and
Fig. 3 shows a schematic of a computer-readable storage medium according to an embodiment of the disclosure.

In the following embodiments are described with reference to the Figures, wherein the same reference signs are used for the same objects throughout the description of the Figures and wherein the embodiment is just one specific example for implementing the disclosure and does not limit the scope of the disclosure as defined by the claims.

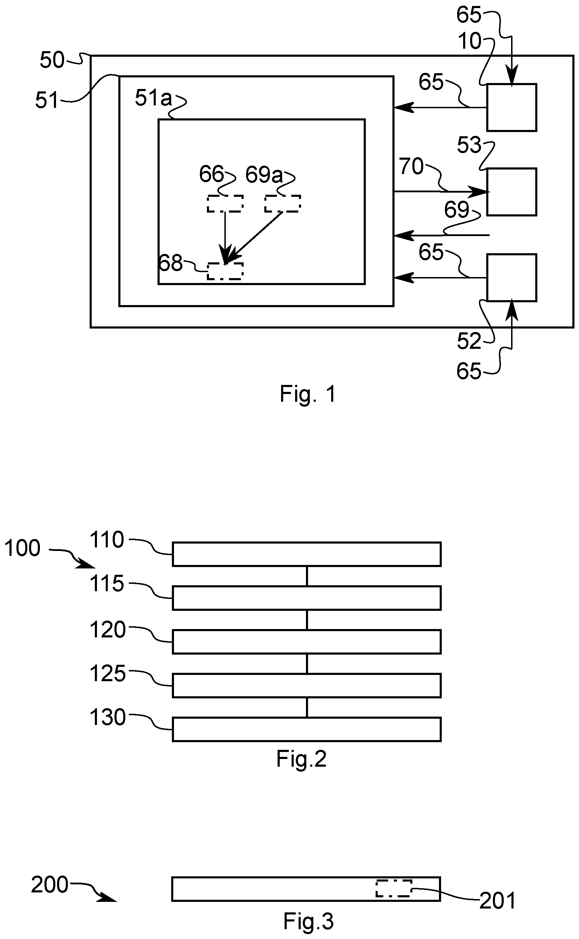

Figure 1 shows schematically a vehicle 50 according to an embodiment of the disclosure. The vehicle 50 is a passenger vehicle. The vehicle 50 is a land vehicle. In addition to the vehicle 50, Figure 1 illustrates a user equipment 10. The user equipment 10 according to the disclosure is a device or apparatus, such as a mobile phone, tablet, wearable device, or other computing device, that is capable of communicating with a cellular network. The user equipment 10 typically includes hardware components and software applications that enable it to perform various functions such as voice calling, data transmission, and internet access.

The vehicle 50 comprises a data processing device 51, a communication module 52 and a user interface 53. The vehicle 50 may further comprise (not shown) camera system to monitor an interior of the vehicle 50 and/or passengers within the vehicle 50. The vehicle 50 may further comprise a plurality of seats, wherein each of the seat is adapted that one of the passengers may be arranged on the seat. The camera system may monitor the passengers on the different seats.

The data processing device 51 and/or the vehicle 50 is adapted to perform the method 100 as described with reference to Figure 2. Therein, the data processing device 51 is communicatively coupled to the communication module 52, the user interface 53 and the user equipment 10.

The communication module 52 is adapted to receive information via a wireless communication channel, for example via a wireless local area network and/or a cellular network. The data processing device 51 and the communication module 52 are communicatively interconnected so that information that is received via the communication module 52 may be transmitted and/or related to the data processing device.

The user interface 53 is adapted to output information that is perceivable by the passenger of the vehicle 50. Therein, the user interface 53 is adapted to output information in a visually and/or acoustically perceivable manner. For example, user interface 53 comprises displays to display visually perceivable information, for example text, images and/or videos. And the user interface 53 comprises for example speakers to present acoustically perceivable information, for example sound and/or voice. The user interface 53 is adapted to output information locally within the vehicle e.g. to present information to one or more of the passengers of the vehicle. The user interface 53 and the data processing device 51 are communicatively interconnected so that the data processing device 51 may control the information that is to be output by the user interface 53.

The data processing device 51 is adapted to obtain an incoming information 65 with a semantic content 66. The semantic content 66 is the meaningful information contained within the incoming information 65 as a dataset and/or document in the form of linguistic, logical and/or ontological elements. The semantic information 66 may pertain the interpretation and understanding of the content of the incoming information 65 beyond its mere syntactical representation. The incoming information 65 comprises a text message, a graphic, a voice message and/or a video message.

Any of the text message, the graphic, the voice message and/or the video message comprises semantic content 66.

The incoming information 65 is obtained via a communication module 52 of the vehicle 50 and/or via a user equipment 10 that is communicatively coupled to the vehicle 50. I.e., the incoming information 65 may be directly received by the communication module 52 and transmitted to the data processing device 51. Alternatively or additionally, the incoming information 65 may be received by the user equipment 10 and transmitted to the data processing device 51. Alternatively or additionally, the incoming message 65 may comprise a discussion that happened over a phone call in the vehicle and/or between passengers.

The data processing device 51 is adapted to determine an identification information 69 of an intended recipient of the incoming information 65. The identification information 69 may for example be obtained by an identification of a device at which the incoming information 65 is intended to be received and/or by a salutation of the incoming information 65. The identification information 69 may comprise an information in relation to an identity of one or more of the passengers of the vehicle 50.

The data processing device 51 is adapted to generate, based on the semantic content 66, a summary 68 of the incoming information 65. The data processing device 51 is adapted to deploy a machine learning model 51a to generate the summary 68. The machine learning model 51a may be a software module that is installed on the data processing device 51 and that is adapted to obtain several information, e.g., the incoming information 65 and/or the identification information 69. The machine learning model 51a is adapted to evaluated the incoming information 65 to obtain the semantic content 66 and an emotion information 69a relating to an emotion that characterizes the incoming information 65. The emotion information 69a may be expressed as one of a plurality of classes that may describe an emotion, e.g., joy, sadness, anger, fear, surprise or the like. The data processing device 51 is adapted to generate the summery 68 depending on the identification information 69 and/or the emotion information 69a. The data processing device 51 is pre-trained to generate the summary 68.

The data processing device 51 is adapted to generate the summary 68 so that the summary 68 comprises a content section relating to the semantic content 66, an emotional section relating to an emotion that characterizes the incoming information 65 and/or an implication section relating to an implication based on the incoming information 65. In other words, the summary 68 may be sectioned into different aspects, wherein the content section reflects the semantic content 66, the emotional section reflects an emotion that may be intended by the incoming information 65 and the implication section reflects an implication that may be intended and/or required by the incoming information.

The data processing device 51 is adapted to determine the summary so that the summary 68 is determined to be output on a user interface 53 of the vehicle 50 as a condensed text, as a graphical representation, as a video and/or acoustically. The data processing device 51 is adapted to output a control signal 70 to user-perceivably output the summary 68 in the vehicle 50. The control signal 70 is output to the output interface 53 to cause outputting the summary 68 so that at least one of the passengers may perceive the summary 68.

Figure 2 shows a schematic chart of a method 100 according to an embodiment of the disclosure. The method 100 of Figure 2 is a method 100 for outputting information in a vehicle 50. Such a vehicle 50 is described with reference to Figure 1. Figure 2 is described under reference to figure 1.

The method 100 of Figure 2 comprises: obtaining 110 an incoming information 65 with a semantic content 66. The incoming information 65 comprises a text message, a graphic, a voice message and/or a video message. The incoming information 65 is obtained via a communication module 52 of the vehicle 50 and/or via a user equipment 10 that is communicatively coupled to the vehicle 50.

The method 100 comprises: determining 115 an intended recipient of the incoming information 65.

The method 100 comprises: determining 120, based on the incoming information 65, an emotion information 69a relating to an emotion that characterizes the incoming information 65.

The method 100 comprises: generating 125, based on the semantic content 66, a summary 68 of the incoming information 65. Generating 125 the summary 68 is performed by a machine learning model 51a. The summary 68 is mimicked based on an information relating to a sender of the incoming information 65.

The summary 68 comprises a content section relating to the semantic content 66, an emotional section relating to an emotion that characterizes the incoming information 65 and/or an implication section relating to an implication based on the incoming information 65.

The summary 68 is determined to be output on a user interface 53 of the vehicle 50 as a condensed text, as a graphical representation, as a video and/or acoustically.

The method 100 comprises: outputting 130 a control signal 70 to user-perceivably output the summary 68 in the vehicle 50.

Generating 125 the summary 68 and/or outputting 130 the control signal 70 is performed depending on the identification information 69 and/or on the emotion information 69a.

Figure 3 shows a schematic of a computer-readable storage medium 200 according to an embodiment of the disclosure. The computer-readable storage medium 200 comprises instructions 201 which, when being executed by a data processing device 51, causes the data processing device 51 to carry out the method 100 as described with reference to Figure 2.

The instructions 201 may be provided as a program code in any code and/or in any language, in particular as a program code that is suitable for vehicle control. The computer-readable medium 200 may be and/or comprise any digital data storage device, such as a USB flash drive, hard drive, CD-ROM, SD card and/or SSD card. The computer program does not necessarily have to be stored on such a computer-readable storage medium, but can also be accessed and/or provided via the internet or otherwise.

### List of reference signs (part of the description)

- 10: user equipment

- 50: vehicle
- 51: data processing device
- 51a: generative machine learning model
- 52: communication module
- 53: user interface

- 65: incoming information
- 66: semantic content
- 68: summary
- 69: identification information
- 69a: emotion information
- 70: control signal

- 100: method
- 110: obtaining
- 115: determining an identification information
- 120: determining an emotion information
- 125: generating
- 130: outputting

- 200: computer program and/or computer-readable storage medium
- 201: instruction

## Claims

1. Method (100) for outputting information in a vehicle (50); wherein the method (100) comprises:
- obtaining (110) an incoming information (65) with a semantic content (66);
- generating (125), based on the semantic content (66), a summary (68) of the information (65); wherein generating (125) the summary (68) is performed by a generative machine learning model (51a); and
- outputting (130) a control signal (70) to user-perceivably output the summary (68) in the vehicle (50).

2. Method (100) as claimed in claim 1, wherein
- the incoming information (65) is obtained via a communication module (52) of the vehicle (50) and/or via a user equipment (10) that is communicatively coupled to the vehicle (50).

3. Method (100) as claimed in claim 1 or 2, wherein
- the incoming information (65) comprises a text message, a graphic, a voice message and/or a video message and/or
- the summary (68) is determined to be output on a user interface (53) of the vehicle (50) as a condensed text, as a graphical representation, as a video and/or acoustically.

4. Method (100) as claimed in any one of the preceding claims, wherein the method (100) further comprises:
- determining (115) an identification information (69) of an intended recipient of the incoming information (65); and
- generating (125) the summary (68) and/or outputting (130) the control signal (70) is performed depending on the identification information (69).

5. Method (100) as claimed in any one of the preceding claims, wherein
- the summary (68) comprises a content section relating to the semantic content (66), an emotional section relating to an emotion that characterizes the incoming information (65) and/or an implication section relating to an implication based on the incoming information (65).

6. Method (100) as claimed in any one of the preceding claims, wherein the method (100) comprises:
- determining (120), based on the incoming information (65), an emotion information (69a) relating to an emotion that characterizes the incoming information (65); and
- generating (125) the summary (68) and/or outputting (130) the control signal (70) is performed depending on the emotion information (69a).

7. Method (100) as claimed in any one of the preceding claims, wherein
- the summary (68) is mimicked based on an information relating to a sender of the incoming information (65).

8. Computer program and/or computer-readable storage medium (200), comprising instructions which, when being executed by a data processing device (51), causes the data processing device (51) to carry out the method (100) as claimed in any one of the preceding claims.

9. Data processing device (51) for a vehicle (50), wherein the data processing device (51) is adapted to perform the method as claimed in any one of claims 1 to 7.

10. Vehicle (50), comprising the data processing device (51) as claimed in claim 9.
